# EUROPEAN PATENT APPLICATION

(11) **EP 1 413 872 A2**
(43) Date of publication of application: **28.04.2004**
(21) Application number: 03078331.0
(22) Date of filing: 22.10.2003
(51) Int. Cl.: G01N 1/04, B23K 35/02

(54) **Apparatus for taking samples of conducting material**

(30) Priority: 24.10.2002 IT MI20022252
(71) Applicant: CESI Centro Elettrotecnico Sperimentale Italiano Giacinto Motta S.P.A., 20134 Milano (IT)
(72) Inventor: Torsello, Giuseppe, 20090 Segrate (MI) (IT)
(74) Representative: Mittler, Enrico

(57) **Abstract**

Herein is described an apparatus for taking at least one sample (4) of a conducting material (3), comprising a cutting tool (6) for taking said at least one sample (4) and moving means (8, 11, 12) of said tool (6). The cutting tool (6) is an electrode of conducting material electrically fed by power supply units (18) and said moving means (8, 11, 12) are capable of making the tool (6) describe a circumference arc for removing said at least one sample (4) from the conducting material (3) in the presence of dielectric means.

## Description

The present invention refers to an apparatus for taking samples of conducting material.

A technique often used for verifying the residual life and/or the quality and the eventual risk of plants and metal components collapsing (failure analysis) is the technique of the "small punch". Such technique consists of the analysis of a sample of material, for example a sample of a component that is part of an industrial plant, to verify its state. The sample of material is taken by means of a special sampler and is taken to laboratories equipped for the analysis to examine the various characteristics such as: tenacity, metallographic structure, chemical composition etc.

The samplers presently in use consist of mechanical devices that use hollow tools, usually diamond, suitable for taking samples that are rotated at a high rotation per minute ratio.

Nevertheless the high number of rotations forced on the tool can cause it to reach high temperatures in the area the sample is being taken which can alter the characteristics of the sample of material taken. Incorrect analysis can derive from this since the sample does not have the same characteristics as the material from which it was taken.

In view of the state of the technique, object of the present invention is to provide an apparatus for taking samples of conducting material that overcomes the above-mentioned inconveniences.

In accordance with the present invention this object is achieved by means of an apparatus for taking at least one sample of a conducting material, comprising a cutting tool for taking said at least one sample and means for moving said tool, characterised in that said cutting tool is an electrode of conducting material electrically fed by powering means and said moving means are capable of making said tool describe a circumferential arc for removing said at least one sample from the conducting material in presence of dielectric means.

The characteristics and advantages of the present invention will appear evident from the following detailed description of an embodiment thereof, illustrated as non-limiting example in the enclosed drawings, in which:
Figure 1 is a partially sectioned schematic side view of an apparatus for taking samples of conducting material according to the present invention;
Figure 2 is a more detailed view of a part of the sampler of Figure 1;
Figure 3 is a partially sectioned enlarged view according to a line III-III of the sampler of Figure 1.

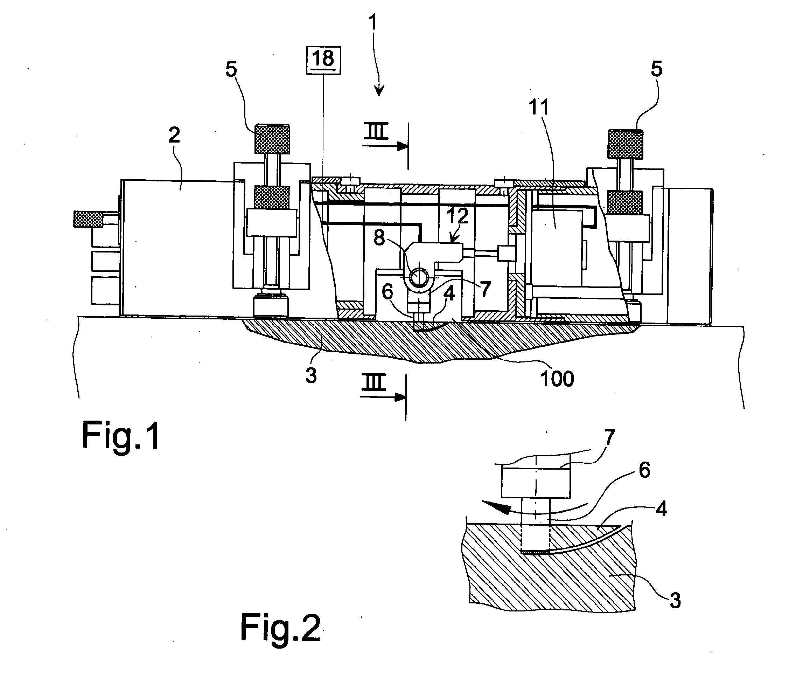

With reference to Figure 1 an apparatus for taking samples of solid materials according to the present invention is shown. Said apparatus comprises a sampler 1 made up of a cylindrical body 2 preferably made of steel that, each single time, is fixed to the component of conducting material 3 from which a sample 4 has to be taken by means of fastening means 5, that can be made up of mechanical or pneumatic or magnetic means.

The sample 4 is taken by means of electro-discharge machining. In fact the cylindrical body 2 presents a lower cavity 100 in which a cutting tool 6 made up of an electrode of conducting material is partially housed. Said electrode 6 is more precisely made up of strips of conducting material, for example Cu.W sintered. The cutting tool 6 has a circumference arc shape and preferably a length of about 85mm, a width of about 10mm and a thickness of about 0.5mm. The material of which the tool 6 is constituted is chosen every time according to the conducting material 3; in this case the sample 4 is taken without the tool 6 wearing out.

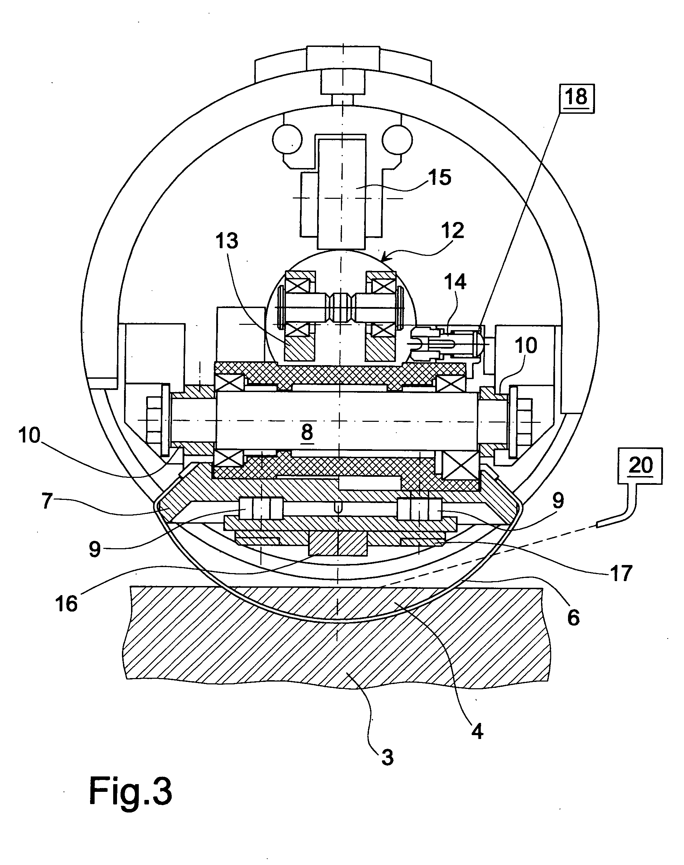

The tool 6, as can be seen better in Figure 3, extends from the cylindrical body 2 and its extremities are fixed to a metal plate 7 which in turn is fixed to a shaft 8 by means of screws 9. The shaft 8 is positioned in the cavity 100 transversally to the longitudinal axis of the cylindrical body 2 and is pivoted to supports 10 so that it can revolve.

The shaft 8 is moved by a stepping motor 11 through a link mechanism 12 fitted with a link rod 13. More specifically the shaft 8 is made to rotate to a lower angle than a straight angle so that the cutting tool 6, fixed to the shaft 8, can cover a smaller circumference arc than a semicircumference.

The sampler 1 also comprises electrical terminals 14 for the electrical connection of the electrode tool 6 to a power supply unit 18, external to the sampler 1, delivering a power voltage of preferably 48 V and end of stroke devices 15 of the tool 6. The sampler also comprises a magnet 16 suitable for capturing the sample 4 taken; said magnet 16 is positioned in the cylindrical body 2 below the shaft 8 and is anchored to a support 17 fixed to the cylindrical body 2.

The apparatus preferably also comprises a device 20 that provides demineralised water used as dielectric for the electro-discharge machining. The device 20 also provides for the collection and regeneration of the water; in fact it is equipped with a filter for particles and an ion exchange resin column for the de-ionisation which the water to regenerate is passed through in succession.

To take the sample 4 from the conducting material 3, demineralised water is sent by the device 20 onto the area of material 3 on which the sample has to be taken. The electrode tool 6 is electrically fed by the power supply unit 18 and is moved through the shaft 8 so as to describe a circumference arc. During the description of said circumference arc the tool 6 cuts a portion of the conducting material 3, as can be seen in Figure 2, so as to take the sample 4 that can then be captured by the magnet 16.

The sample 4 is then taken to a laboratory so that it can be submitted to analysis.

In this manner high temperatures are not reached in the zone of the material 3 for the sample 4 to be taken and therefore the risk of altering the metallographic structure of the sample 4 is eliminated.

The method used to take sample 4 is not of an invasive type, that is the depth of the sample taken is easily maintained within the reinforcement thicknesses provided for in the planning phase of the conducting material 3.

The use of a computer to command the electric power supply operations of the electrode 6 and the activation of the stepping motor 11 can be provided for.

## Claims

1. Apparatus for taking at least one sample (4) of a conducting material (3), comprising a cutting tool (6) for taking said at least one sample (4) and moving means (8, 11, 12) of said tool (6), **characterised in that** said cutting tool (6) is an electrode of conducting material electrically fed by power supply units (18) and said moving means (8, 11, 12) are capable of making said tool (6) describe a circumference arc for removing said at least one sample (4) from the conducting material (3) in presence of dielectric means.

2. Apparatus according to claim 1, **characterised in that** it comprises a device (20) for the flow of demineralised water onto the conducting material (3), said dielectric means being made up of said demineralised water.

3. Apparatus according to claim 1, **characterised in that** said electrode (6) has a circumference arc shape.

4. Apparatus according to claim 1, **characterised in that** it comprises a body (2) fitted with said moving means (8, 11, 12) and said tool (6), said moving means (8, 11, 12) comprising a shaft (8) rotatably pivoted to the body (2) and coupled with said electrode (6) and a stepping motor (11) suitable for determining the rotation of the electrode (6).

5. Apparatus according to claim 4, **characterised in that** said body (2) is a cylindrical body provided with a cavity (100) communicating externally in one part that can be brought close to the conducting material (3), said tool (6) being housed in said cavity (100) so that it extends from it while it describes said circumference arc.

6. Apparatus according to any of the previous claims, **characterised in that** said circumference arc described by the tool (6) is smaller than a semicircumference.
